(19) Europäisches Patentamt

European Patent Office

Office européen des brevets

(11) Veröffentlichungsnummer: **0 369 039 B1**

# (12) EUROPÄISCHE PATENTSCHRIFT

(45) Veröffentlichungstag der Patentschrift: **21.10.92**

(51) Int. Cl.⁵: **B01D 35/02**, B01D 29/31

(21) Anmeldenummer: **88118559.9**

(22) Anmeldetag: **08.11.88**

Die Akte enthält technische Angaben, die nach dem Eingang der Anmeldung eingereicht wurden und die nicht in dieser Patentschrift enthalten sind.

(54) **Filter für flüssige Kraftstoffe.**

(43) Veröffentlichungstag der Anmeldung:
**23.05.90 Patentblatt 90/21**

(45) Bekanntmachung des Hinweises auf die Patenterteilung:
**21.10.92 Patentblatt 92/43**

(84) Benannte Vertragsstaaten:
**AT BE CH DE ES FR GB IT LI NL SE**

(56) Entgegenhaltungen:
**DE-A- 3 609 905**
**DE-A- 3 609 906**
**FR-A- 2 201 913**
**US-A- 4 617 121**

(73) Patentinhaber: **FILTERTEK GmbH**
**Langer Weg 1-9, Postfach 148**
**W-4048 Grevenbroich 4 (Gustorf)(DE)**

(72) Erfinder: **Kools, Wilhelm**
**Birkhofstrasse 2**
**W-4052 Korschenbroich 3(DE)**

(74) Vertreter: **Flaig, Siegfried**
**Mendelstrasse 12**
**W-4100 Duisburg 46(DE)**

EP 0 369 039 B1

**Beschreibung**

Die Erfindung betrifft ein Filter für flüssige Kraftstoffe, das durch eine enge Kreisöffnung in den Innenraum eines Kraftstofftanks einsetzbar ist, bestehend aus einem ein allseitig geschlossenes Filtergewebe im Inneren stützenden elastischen, ebenen Stützrahmen, der aus thermoplastischem Kunststoff hergestellt ist, mit einem mit dem elastischen, ebenen Stützrahmen verbundenen Pumpenanschlußstutzen, der aus dem geschlossenen Filtergewebe ragt, wobei außer dem ebenen Stützrahmen, der mit der Anschlußnabe einen einstückig herstellbaren Spritzgußteil bildet, nur noch der das Filtergewebe in der Anschlußnabe einspannende Pumpenanschlußstutzen vorgesehen ist.

Ein derartiges Filter ist aus der DE-A1-36 09 906 bekannt. Das bekannte Filter beruht auf der Erkenntnis, daß solche Filter Formänderungen erfordern, um das fertigmontierte Filter durch die meist nur ca. 40-60 mm Durchmesser aufweisenden Kreisöffnungen zu dirigieren. Da dieser Vorgang Montagezeit bedeutet und manuelle Geschicklichkeit erfordert, wird bekannterweise eine ausreichende Formänderungseigenschaft bei günstiger Form und zweckentsprechenden Abmessungen verlangt.

Es hat sich jedoch gezeigt, daß die bekannnten Maßnahmen zur Erlangung ausreichender vorübergehender Formänderungen nicht genügen und daß vor allen Dingen die Abmessungen im Bereich des Pumpenanschlußstutzens noch relativ groß in der Höhe sind und daher ungünstig sind und daß die benötigten Einzelteile auch nicht optimal montiert werden können.

Der vorliegenden Erfindung liegt deshalb die Aufgabe zugrunde, die Elastizität des Stützrahmens weiter zu erhöhen und die Gesamtabmessungen des Filters (in der Höhe) für einen leichteren Zusammenbau einerseits und für einen leichteren Einbau in den Kraftstofftank andererseits zu verbessern.

Die gestellte Aufgabe wird erfindungsgemäß dadurch gelöst, daß der elastisch verwindbare und/oder umbiegbare Stützrahmen einen einzigen, freien, länglichen oder ovalen Innenraum bildet, wobei ausschließlich die Verbindungsstelle zu einer Anschlußnabe starre Stabilität derart aufweist daß die Anschlußnabe in ihrer zentrischen Innenbohrung einen sich axial nach unten verengenden Eingangskonus und eine unmittelbar angeschlossene, einen Absatz bildende zylindrische Erweiterungsbohrung aufweist. Diese Lösung schafft eine erheblich größere Elastizität bzw. Formänderungsfreiheit, da das Filter noch leichter als bisher verwunden, umgebogen oder geknickt werden kann beim Einschieben in den Kraftstofftank. Außerdem tritt eine Verminderung der Bauhöhe dadurch ein, daß die bekannte Spannhülse entfällt, vielmehr deren Aufgaben durch den Pumpenanschlußstutzen übernommen werden, so daß lediglich nur noch zwei Teile außer dem Filtergewebe erforderlich werden.

Weiterhin wird vorgeschlagen, daß der Pumpenanschlußstutzen an einem in die Anschlußnabe einsteckbaren Schaft einen gleichen Einführkonus und einen den Eingangskonus in montiertem Zustand hintergreifenden, in die Erweiterungsbohrung passenden zylindrischen Abschnitt aufweist. Demzufolge übernimmt der Pumpenanschlußstutzen die bisherigen Funktionen der bekannten Spannhülse, so daß nur noch zwei Spritzgußteile benötigt werden.

Eine weitere Verbesserung der Erfindung besteht darin, daß bis kurz vor dem Einsetzen in den Innenraum des Kraftstofftanks der Pumpenanschlußstutzen mit einer aufsteckbaren und abnehmbaren Kappe verschlossen ist. Die Kappe verhindert das Eindringen von Schmutzteilchen während des Transports der Filter bis zur Endmontage in den Kraftstofftank.

In der Zeichnung sind Ausführungsbeispiele der Erfindung schematisch dargestellt und werden nachfolgend näher erläutert.

Es zeigen:

Fig.1      eine Seitenansicht des Stützrahmens ohne andere Filterteile,

Fig.2      eine Draufsicht auf den Stützrahmen gemäß Fig.1,

Fig.3      eine Draufsicht auf das Komplettfilter mit einem alternativen Stützrahmen,

Fig.4      einen Teilschnitt A-B gemäß den Angaben in den Fig. 2 und 3 und

Fig.5      das komplette Filter im Längsschnitt, bestehend aus dem Stützrahmen mit Anschlußnabe, dem Pumpenanschlußstutzen, der Kappe und dem Filtergewebe.

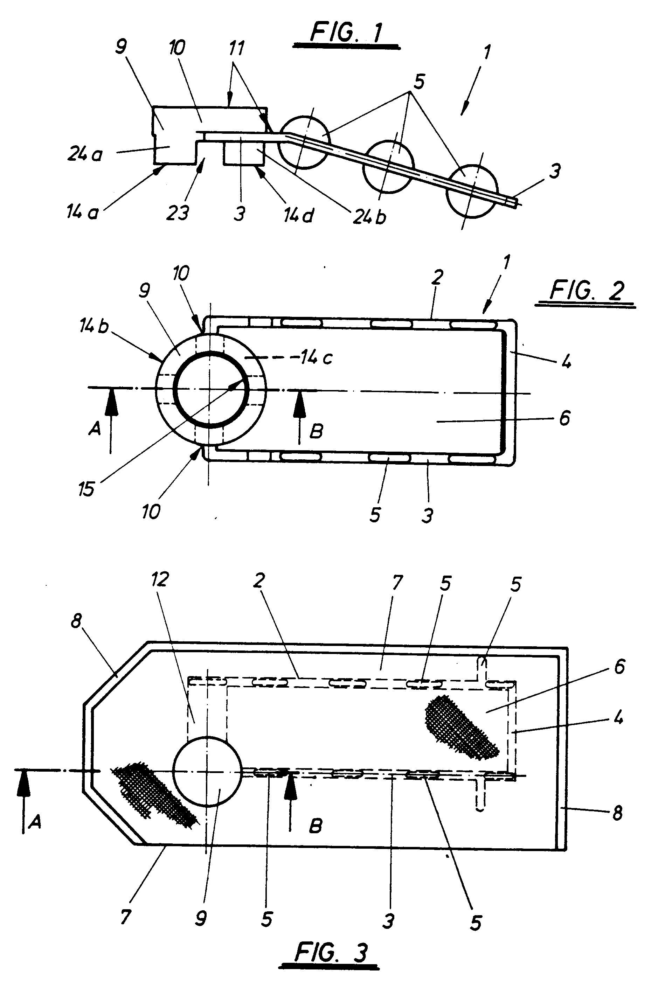

Gemäß Fig.1 weist ein Filter für flüssige Kraftstoffe, wie z.B. Benzin, das durch eine ca. 40 bis 60 mm enge Kreisöffnung in den Innenraum eines Kraftstofftanks von Fahrzeugen geschoben werden muß, einen elastischen Stützrahmen 1 auf, der aus thermoplastischem Kunststoff hergestellt ist. Der Stützrahmen 1 wird aus relativ dünnen Stangenabschnitten 2, 3 und 4 gebildet, die jeweils Abstandshalter 5 tragen und einen freien Innenraum 6 eingrenzen. Der freie Innenraum 6 kann länglich sein oder oval oder wie z.B. in den Fig. 2 und 3 dargestellt, ein Rechteck bilden. Nach einer solchen Grundform ist das Filtergewebe 7 zugeschnitten und an einer Falzkante 8 auf den drei sich ergebenden Seiten verschweißt.

Die Elastizität, Verbiegbarkeit, Verdrehbarkeit und Knickbarkeit des Filters wird maßgebend durch die Grundform des Stützrahmens 1 bestimmt. Die dünnen Stangen 2 bis 4 sind aus einem Guß hergestellt und sodann starr an einer Anschlußnabe 9 befestigt, wobei sich die starre Verbindungsstelle 10 jeweils dadurch ergibt, daß die Stangen 2 bis 4 und die Anschlußnabe 9 als ein einstückiges Spritzgußteil 11 hergestellt sind. Die starre Verbindungsstelle 10 ist nach einem alternativen Ausführungsbeispiel (Fig.3) durch eine Rippe 12 gebildet.

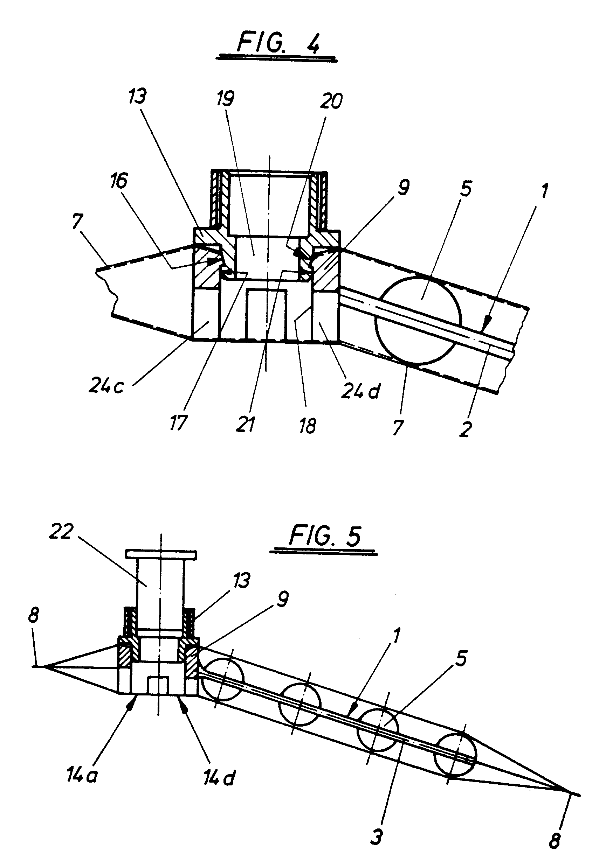

Gemäß Fig.4 besteht das Komplettfilter nur noch aus dem Stützrahmen 1 mit der Anschlußnabe 9, aus dem Filtergewebe 7 und aus einem das Filtergewebe 7 einspannenden Pumpenanschlußstutzen 13.

Die Anschlußnabe 9 bildet besonders für die Montage günstige Auflageflächen 14a bis 14d (Fig.2). Die Anschlußnabe 9 weist innerhalb ihrer zentrischen Innenbohrung 15 einen sich axial nach unten (Fig.4) verengenden Eingangskonus 16 und eine unmittelbar angeschlossene, einen Absatz 17 bildende zylindrische Erweiterungsbohrung 18 auf. Demgegenüber besitzt der Pumpenanschlußstutzen 13 an einem in die Anschlußnabe 9 einsteckbaren Schaft 19 einen gleich konischen Einführkonus 20 und einen den Eingangskonus 16 im montierten Zustand hintergreifenden, in die Erweiterungsbohrung 18 passenden zylindrischen Abschnitt 21 auf. Nach dem Einlegen des Stützrahmens 1 in das Filtergewebe 7 wird der Pumpenanschlußstutzen 13 in die Anschlußnabe 9 gepreßt und danach das Filtergewebe 7 verschweißt.

Nach dem Verschweißen bleibt der Pumpenanschlußstutzen 13 bis kurz vor dem Einsetzen des Filters in den Innenraum des Kraftstofftanks mit einer aufsteckbaren und wiederabnehmbaren Kappe 22 (ebenfalls aus Kunststoff) verschlossen (Fig.5).

Es ist möglich, durch eine sich beim Herstellen des Spritzgußteils 11 von unten ergebende Öffnung 23 und durch die Bildung von einzelnen Füßen 24a, 24b, 24c und 24d, den Pumpenanschlußstutzen 13 wieder zu lösen, wobei eine gewisse Kraft aufzubringen ist, um die Füße 24a bis 24d auseinanderzuspreizen.

**Patentansprüche**

1. Filter für flüssige Kraftstoffe, das durch eine enge Kreisöffnung in den Innenraum eines Kraftstofftanks einsetzbar ist, bestehend aus einem ein allseitig geschlossenes Filtergewebe (7) im Inneren stützenden elastischen ebenen Stützrahmen (1), der aus thermoplastischem Kunststoff hergestellt ist, mit einem mit dem elastischen, ebenen Stützrahmen (1) verbundenen Pumpenanschlußstutzen (13), der aus dem geschlossenen Filtergewebe (7) ragt, wobei außer dem ebenen Stützrahmen (1), der mit der Anschlußnabe (9) einen einstückig herstellbaren Spritzgußteil (11) bildet, nur noch der das Filtergewebe (7) in der Anschlußnabe (9) einspannende Pumpenanschlußstutzen (13) vorgesehen ist,
dadurch gekennzeichnet,
daß der elastisch verwindbare und/oder umbiegbare ebene Stützrahmen (1) einen einzigen, freien, länglichen oder ovalen Innenraum (6) bildet, wobei ausschließlich die Verbindungsstelle (10) zu einer Anschlußnabe (9) jeweils starre Stabilität derart aufweist, daß die Anschlußnabe (9) in ihrer zentrischen Innebohrung (15) einen sich axial nach unten verengenden Eingangskonus (16) und eine unmittelbar angeschlossene, einen Absatz (17) bildende zylindrische Erweiterungsbohrung (18) aufweist.

2. Filter nach Anspruch 1,
dadurch gekennzeichnet,
daß der Pumpenanschlußstutzen (13) an einem in die Anschlußnabe (9) einsteckbaren Schaft (19) einen gleichen Einführkonus (16) in montiertem Zustand hintergreifenden, in die Erweiterungsbohrung (18) passenden zylindrischen Abschnitt (21) aufweist.

3. Filter nach den Ansprüchen 1 und 2,
dadurch gekennezichnet,
daß bis kurz vor dem Einsetzen in den Innenraum des Kraftstofftanks der Pumpenanschlußstutzen (13) mit einer aufsteckbaren und abnehmbaren Kappe (22) verschlossen ist.

**Claims**

1. Filter for liquid fuels, which can be inserted through a narrow circular opening into the interior of a fuel tank, consisting of a resilient, flat support frame (1) supporting in the inside a filter gauze (7), which is closed on all sides, which support frame (1) is made from thermoplastic synthetic material, with a pump connection socket (13) connected to the resilient, flat support frame (1), which socket projects from the closed filter gauze (7), whereby apart from the flat support frame (1), which with the connection boss (9) forms an injection moulded part (11) able to be produced in one piece, only the pump connection socket (13) clamping the filter gauze (7) in the connecting boss (9) is provided, characterised in that the flat support frame (1) which can be twisted resiliently and/or bent over forms a single free, elongated or oval interior chamber (6), exclusively the connecting point (10) to a connection boss (9) respectively having rigid stability so that the connection boss (9) in its central inner bore (15) has an inlet cone (16) tapering axially downwards and a directly connected, cylindrical enlargement bore (18) forming a shoulder (17).

2. Filter according to Claim 1, characterised in that on a shaft (19) able to be inserted in the connection boss (9), the pump connection socket (13) comprises a cylindrical section (21) fitting in the enlargement bore (18), engaging behind the same insertion cone (16) in the assembled state.

3. Filter according to Claims 1 and 2, characterised in that until shortly before the insertion into the interior of the fuel tank, the pump connection socket (13) is closed off by a cap (22) which can be inserted and removed.

**Revendications**

1. Filtre pour carburant liquide qu'on peut insérer dans un orifice circulaire étroit d'un réservoir de carburant, constitué d'un cadre d'appui (1) plan élastique qui supporte à l'intérieur un tissus (7) filtrant fermé de tous côtés, qui est réalisé en matière plastique avec une tubulure de raccordement (13) de pompe reliée au cadre d'appui (1) plan élastique qui dépasse du tissu filtrant (7) fermé, en dehors du cadre plan d'appui (1) qui constitue une seule pièce moulable (11) par injection avec le moyeu de raccordement (9), on prévoit que la tubulure de raccordement de la pompe (13) tende le tissu filtrant (7) dans le moyeu de raccordement (9), caractérisé en ce que le cadre d'appui (1) flexible et/ou pouvant être voilé élastiquement présente une seule chambre interne (6) vide oblongue ou ovale, seule la zone de liaison (10) à un moyeu de raccordement (9) présente une stabilité rigide de sorte que le moyeu de raccordement (9) présente dans son alésage interne centré (15) un cône d'entrée (16) se rétrécissant axialement vers le bas et un alésage (18) d'élargissement cylindrique formant un rebord (17) qui s'y raccorde directement.

2. Filtre selon la revendication 1, caractérisé en ce que la tubulure de raccordement de la pompe (13) présente le même cône d'insertion (16) sur une tige (19) insérable dans le moyeu de raccordement (9) à l'état monté et une pièce cylindrique (21) s'adaptant dans le trou d'élargissement (18) venant en prise à l'état monté dans le cône d'insertion.

3. Filtre selon les revendication 1 et 2, caractérisé en ce qu'on laisse fermée la tubulure de raccordement de la pompe (13) avec un bouchon (22) qu'on peut insérer et enlever juste avant le montage du filtre à l'intérieur du réservoir de carburant.

*FIG. 1*

*FIG. 2*

*FIG. 3*

## FIG. 4

13  19  20

16

7  9  5  1

24c

17  21  18  24d  7  2

## FIG. 5

22  13  9

8  1

5

14a  14d

3  8